# EUROPEAN PATENT SPECIFICATION

(11) **EP 2 292 843 B1**
(45) Date of publication and mention of the grant of the patent: **02.10.2013**
(21) Application number: 09009649.6
(22) Date of filing: 25.07.2009
(51) Int. Cl.: E01C 23/03, E01C 11/16

(54) **Device for laying of the geosynthetic reinforcement**
Vorrichtung zum Verlegen einer Geokunststoff-Bewehrung
Dispositif pour la pose d'un renfort géosysnthétique

(43) Date of publication of application: 09.03.2011
(73) Proprietor: Centrum dopravniho vyzkumu, v.v.i., 636 00 BRNO (CZ)
(72) Inventor: Pospisil, Karel, 616 00 Brno (CZ)
(74) Representative: Malusek, Jiri

(56) References cited:
- EP-A- 0 241 803
- WO-A-2008/107466
- DE-U1-202004 006 741

## Description

### Technical background

The present invention relates to a device that facilitates laying geosynthetics with tips onto poor bearing grounds.

### State of the art

The importance of geosynthetics used in the ground body has been known in the art for a long time. In addition to the separating, draining, filtering, protecting or surface antieroding functions, the reinforcing function is also useful. Fills of subgrades for roadways and railways, which are reinforced by geosynthetics, are widely used applications of reinforcing geosynthetic materials. The reinforcing function of geosynthetics understood as a tool for increasing the load-bearing capacity of poor bearing grounds, as mentioned in the literature, is unverifiable in some specific cases. For this reason, a geosynthetic equipped with tips was proposed, which tips are designed to ensure the desired interaction of the geosynthetic with the poor bearing subsoil.

At the present, geosynthetics are laid or spread manually, with the aid of an simple device comprising a roll holder mounted on a truck or another vehicle. When being laid, the geosynthetic is uncoiled from the roll and manually spread on to the base course or onto a structural layer of a roadway or railway subbase. In case that geocells (a special kind of geosynthetic) are to be spread, the handling process is more difficult since the folded geosynthetic must be stretched across the plane of the base course, subsequently the meshes thereof must be filled with suitable loose material and finally the latter must be compacted.

In order to strengthen the reinforcing function of the geosynthetic material used as a tool for increasing the load-bearing capacity of poor bearing, small-grained grounds, the geosynthetic in form of a geogrid with tips was proposed. When the geogrid is applied, the tips bite into the subsoil, thus reinforcing the entire structure. Although such geosynthetic equipped with tips can be applied manually in a usual way, because during uncoiling from the roll the tips release and return to their working position where they become perpendicular with respect to the plane of the geogrid owing to their inherent recovering capacity, it is more favourable if the tips are guided when straightening up and biting into the subsoil. Such geosynthetic is the subject of the parallel patent application.

Diverse geosynthetics are known consisting of meshes and various elements that are elevated with respect to the base structure. A solution of such kind is disclosed e.g. in US 4,472,086 wherein a geogrid comprises fibres, that extend in one direction, i.e. either in the longitudinal or in the transversal direction, are wrapped by an additional fibre that forms loops in the points where knots are situated. Although this enables to make the entire area rougher, the technological procedure used is arduous and the roughing effect achieved in not sufficient.

EP 1 458 912 B1 discloses a geogrid wherein the fibres are formed by braids made of multiple fibres and having the shape of spherical elements in the points where knots are situated. Although this enables to make the entire area rougher, the technological procedure used is arduous and the roughing effect achieved in not sufficient. A similar grid is disclosed in DE 4123055.

EP 0 333 576 B1 discloses a geogrid wherein the fibres are formed by strips that are twisted in one direction, forming spindle-shaped segments. This enables to achieve such arrangement where the strips are partly oriented with respect to the plane of the geosynthetic material. However, the production of such geogrid is demanding and an increased volume of the geogrid must be handled when the latter is coiled.

Nevertheless, the elements protruding as described above do not prevent such geogrids from being coiled onto rolls and then uncoiled from such rolls again, after having been transported to a building site.

There are multiple methods for spreading geogrids onto the subbase. E.g. US 4,280,777 discloses an outrigger in form of a bail arm that is arranged in front of the hood of a tractor and equipped with a fork carrying a centred roll of the material to be laid. At the beginning of the laying procedure, the bail arm is lowered until the roll rests on the subsoil, then the end portion of the material is fastened to the ground and as the tractor moves forward, the material uncoils being additionally pressed by the wheels of the tractor into the subsoil. FR 2621214 discloses a similar solution wherein the fork may be installed behind the tractor enabling the material to be uncoiled from an overhead position. However, such uncoiling methods are not applicable for a geosynthetic that has markedly protruding tips when put into the working position.

US 3,534,537 presents an improved solution consisting in that the vehicle has a special semitrailer attached thereto and equipped with an arm carrying a roll from which the material is uncoiled onto a transporter where the material is additionally compacted or alternatively treated before leaving the end part of the transporter and being laid onto the subsoil. However, such uncoiling methods are not applicable for a geosynthetic that has markedly protruding tips when put into the working position.

FR 2734291 describes an arrangement wherein a high mobile framework structure is erected having a transversal beam with a box-shaped bail arm attached thereto. Again, a centred roll of the material is arranged at the end of the bail arm. The roll can be loaded in an overhead position. Then, the arm is lowered and uncoiling can be carried out in any appropriate elevation. Such structure is unstable, expensive and not applicable for a geosynthetic that has markedly protruding tips when put into the working position.

DE36 35 272 A1 discloses a lightweight framework trailer equipped with a bail arm similar to that described above. Again, a centred roll of the material is arranged at the end of the arm. The roll can be loaded in an overhead position. Then, the arm is lowered and the material to be laid can be uncoiled from the roll. Again, such structure is unstable, expensive and not applicable for a geosynthetic that has markedly protruding tips when put into the working position.

WO 2008/107466 describes a device for laying a reinforcing grid on asphalt layers.

The aim of the present invention is to provide a device for laying the above mentioned new type of geosynthetic with tips. Such device should enable to pack the geosynthetic tidily so as to form regular rolls on the production site and to put the same into the working position with upright tips during uncoiling on the building site. Furthermore, the solution should enable such device to be transported using common types of vehicles.

### Disclosure of the invention

The above drawbacks are largely eliminated by the device for laying geosynthetics according to the present invention as defined in claim 1.

### Overview of the figures

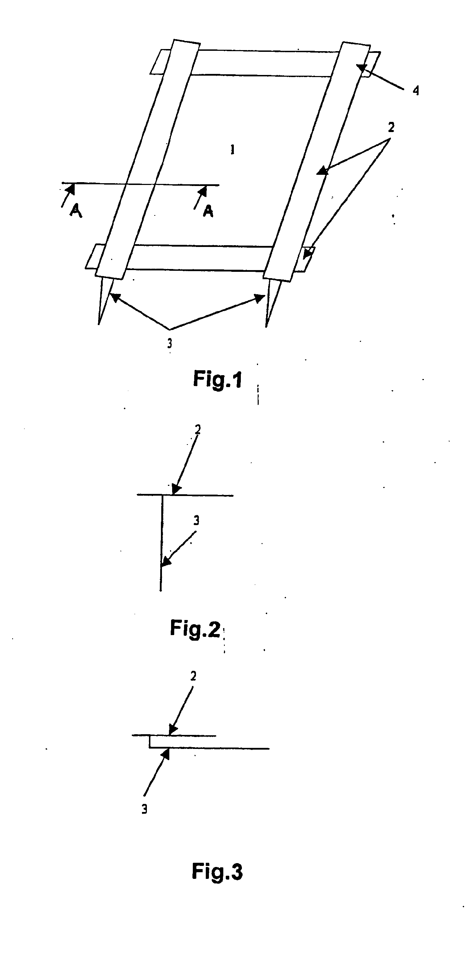

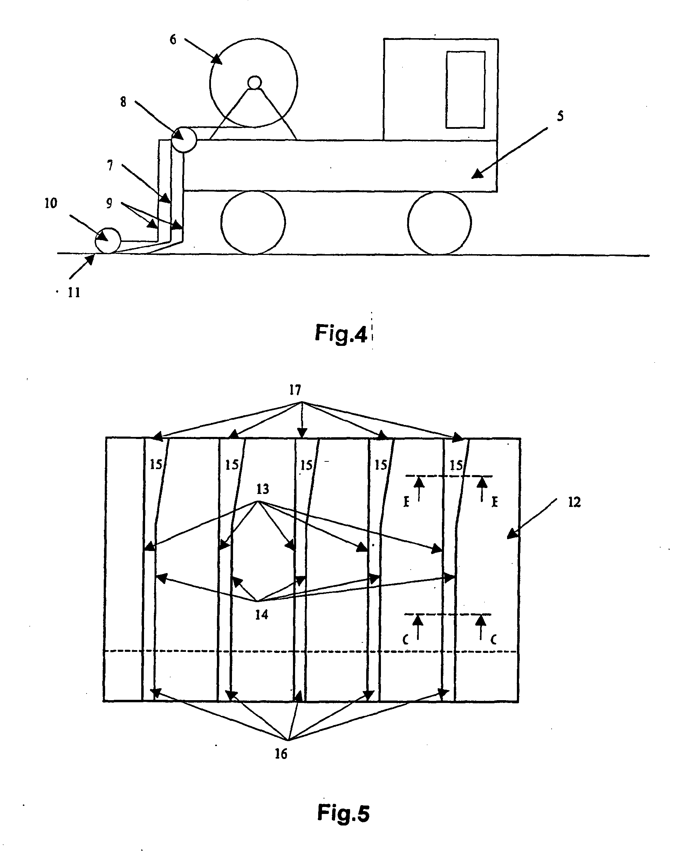

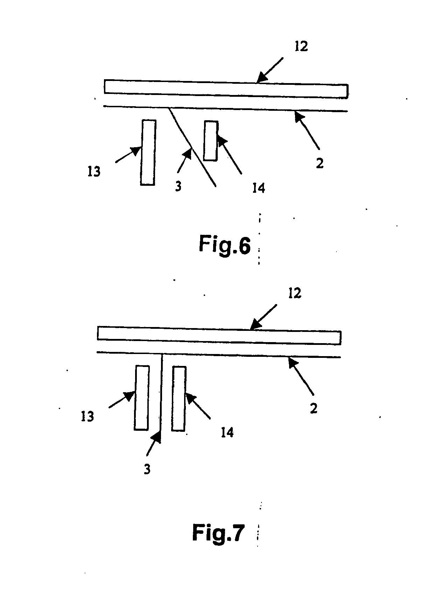

The invention will be further explained by means of the accompanying drawings wherein Fig. 1 shows a schematic view of one mesh of the geosynthetic grid with stabilizing tips of the new type, Fig. 2 shows the magnified detail of section A-A led through one strip of the grid shown in Fig. 1, where the tip is in its working position, Fig. 3 presents the same detail, where the tip is in its transporting position, Fig. 4 shows a schematic view of a vehicle carrying a roll of geosynthetic placed in a holder along with a schematic view of a guiding device for straightening the tips and holding the same in their working positions, Fig. 5 shows a schematic view of a guiding device as seen from the body of the vehicle, Fig. 6 shows a detailed section B-B led through the device shown in Fig. 5 in the location where the tip of the geosynthetic is gradually straightened up to it working position, 7 shows a detailed section C-C led through the device shown in Fig. 5 in the location where the upright tip begins to bite into the subsoil.

### Preferreed embodiment of the invention

Fig. 1 shows one mesh 1 of the geosynthetic grid with tips 3 wherein the grid is composed of the strips 2 that are joint in the area of the knots 4. As mentioned above, a new type of geosynthetic is concerned. Fig. 2 shows a detailed section A-A led through the strip 2 of the geosynthetic and through the tip 3 in its working position as shown in Fig. 1, while Fig. 3 shows the same detail where the tip 3 is in its transporting position after the geosynthetic has been coiled onto the roll.

Fig. 4 shows a schematic view of a common vehicle 5 carrying a known roll holder containing the roll 6 with the geosynthetic. The geosynthetic 7 is led into the guiding mechanism 9 over the sheave 8 and the it is pressed into the subsoil 11 by the press-on sheave 10.

Fig. 5 shows a schematic view of the carrying part 12 of the guiding mechanism 9 with straight guiding rails 13 and curved adjusting rails 14, as seen in the orientation from the vehicle 5.

It is evident that the carrying part 12 includes multiple assemblies comprising the rails 13, 14 and that the adjusting rail 14 has a curved upper portion, i.e. that portion which forms the contact face between the carrying part 12 and the adjacent body of the vehicle, that extends from the preceding straight portion, thus creating the funnel 15 having its inlet 17 in the widest section of said upper portion. The width of the inlet 17 is equal to the total width of the strip 2 and the composite tip 3, which is evident from Fig. 3. Herein, the tip 3 is oriented to the right and so the funnel 15 opens to the right, as well. However, it is obvious that both the direction of the composite tip 3 and that of the opening of the funnel 15 may have the opposite orientation. Between the straight portion of the rails 13 and 14, there is a uniform spacing 16.

In the aforesaid upper portion, the adjusting rail 14 is formed as a lead-in profile having its lowest point at the upper edge of the carrying part 12 and continuously increasing in height up to the transition into the corresponding straight portion. This will be also discussed in connection with the description based on Fig. 6.

Fig. 6 shows a detailed section led through the device 9 shown in Fig. 5 in the location B-B. Herein, the carrying part 12 of the guiding device 9, the straight guiding rail 13 and the adjusting rail 14 are also illustrated, the latter gradually increasing in height and simultaneously approaching to the straight guiding rail 13. This, in turn, causes the tip 3 of the geosynthetic to become upright and to reach its final working position.

Fig. 7 shows a detailed section led through the device 9 shown in Fig. 5 in the location C-C. Herein, the carrying part 12 of the guiding device 9, the straight guiding rail 13 and the adjusting rail 14 are also illustrated, the latter now being equal in height with the guiding rail 13 and parallel with the same. The tip 3 of the geosynthetic is guided by the rails 13 and 14 in its working position until it reaches the point where it begins to bite into the subsoil.

When the geosynthetic 7 passes through the guiding mechanism 9, first the tips gradually become upright and then they get fixed in their working position. Afterwards, the upright tips 3 of the geosynthetic 7 are pressed by the press-on sheave 10 into the subsoil 11.

The geosynthetic 7 is loaded into the guiding mechanism 9 manually and feeding the same (uncoiling from the roll) is then accomplished either by means of the tractive force of the geosynthetic already pressed in or through a forcibly induced feeding action. The forced feed of the geosynthetic max be preferably carried out in that the sheave 10 is equipped with a driving unit, such as a suitable electric motor.

## Claims

1. *Device for laying geosynthetics in form of a grid composed of strips (2) provided with tips (3), the device consisting of the geosyntetics coiled to form a roll (6) with the tips (3) pressed onto the corresponding strips, a guiding mechanism (9) that is arranged on the body of a vehicle in a perpendicular position with respect to the subsoil and comprises a carrying part (12) provided with pairs of straight guiding rails (13) and corresponding curved adjusting rails (14), the adjusting rails (14) having a curved upper portion extending from a preceding straight portion, a pair of rails (13,14) thus forming a funnel (15) having its inlet (17) in the widest section, the width of the inlet (17) being equal to the total width of the strip (2) with the tips (3) in transporting position when coiled to form a roll, the composite tips (3) and the spacing (16) between the straight portions of the rails (13, 14) being uniform* so *that when each strip of the grid is fed into the funnel, the individual tips gradually reach their upright position, the device having press-on sheaves (10) for pressing the tips into the subsoil.*

## Patentansprüche

1. Vorrichtung zum Auflegen von Geosyntetikum in der Form von einer Netzstruktur aus Streifen (2) mit Schneiden (3), wobei die Vorrichtung besteht aus in eine Rolle (6) von eingewickeltem Geosyntetikum mit den aufgepressten Schneiden (3) zu den Streifen (2), weiter besteht aus einer Führungseinrichtung (9), die auf dem Wagenkasten senkrecht zu dem Boden angeordnet ist und einem Tragteil (12), der mit einem Paar von den geraden Führungsleisten (13) und gekrümmten Aufstellleisten (14) versehen ist, wobei die Aufstellleisten (14) in dem oberen Teil von dem vorhergehenden Abschnitt gekrümmt sind und ein Trichter (15) bilden, der in der breitesten Stelle einen Eintritt (17) hat, wobei die Eintrittsbreite (17) der gesamten Streifenbreite mit der Scheide (3) in der Transportposition, wenn in die Rolle eingewickelt sind, entspricht, wobei die Schneiden (3) und Lücke (16) zwischen den geraden Leistenabschnitten (13 und 14) identisch sind, also wenn jeder Streifen (2) der Netzstruktur in den Trichter geführt ist, dann die einzelnen Schneiden (3) stufenweise eine aufgerichtete Position einnehmen und die Vorrichtung Eindringsrollen (10) für das Eindringen in den Boden haben.

## Revendications

1. Le dispositif de pose des géosynthétiques en forme du filet en bandes (2) aux lames (3) ledit dispositif étant constitué d'une grille géosynthétique enroulée en rouleau (6) aux lames (3) fixées aux bandes correspondantes (2), d'un dispositif de guidage (9) disposé sur la benne perpendiculairement à la couche sous-jacente et comportant l'élément porteur (12) pourvu d'une paire des barres de guidage droites (13) et des barres de fixation courbées (14) les barres de fixation (14) étant dans leur partie supérieure courbées à partir de la zone droite précédente et formant un entonnoir (15) qui comporte l'entrée (17) dans sa zone plus large la largeur de l'entrée (17) correspondant à la largeur totale de la bande (2) à lame (3) en position de transport lorsqu'elles sont enroulées en rouleau les lames (3) et le jeu (16) entre les zones droites des barres (13 et 14) étant identiques étant donné que lorsque toute bande du filet est dirigée vers l'entonnoir les différentes lames occupent à tour de rôle leur position redressée, et le dispositif est muni des poulies (10) pour enfoncer les lames dans la couche sous-jacente.
